# EUROPEAN PATENT APPLICATION

(11) **EP 4 053 855 A1**
(43) Date of publication of application: **07.09.2022**
(21) Application number: 22159447.6
(22) Date of filing: 01.03.2022
(51) Int. Cl.: G21F 1/10, G21K 4/00

(54) **RADIATION-SCINTILLATED SHIELD AND MANUFACTURING METHOD OF RADIATION SHIELDING RESIN**

(30) Priority: 05.03.2021 JP 2021035354
(71) Applicant: Toshiba Energy Systems & Solutions Corporation, Saiwai-ku Kawasaki-shi Kanagawa 212-0013 (JP); Toshiba Materials Co., Ltd., Yokohama-shi, Kanagawa (JP)
(72) Inventor: NAKAYAMA, Kohichi, Kanagawa (JP); NITTOH, Koichi, Tokyo (JP); SONODA, Yukio, Tokyo (JP); FUKUTA, Yukihiro, deceased (JP)
(74) Representative: Marks & Clerk LLP

(57) **Abstract**

According to an embodiment, a radiation-scintillated shield (100, 100a) which attenuates an incident radiation (1), includes a shielding part (5) containing an activator-added gadolinium compound as an aggregate (11). The activator uses the gadolinium compound as a base material and emits light when struck by the radiation (1). Consequently, it becomes possible to shield a γ-ray and a neutron with a thickness which is about the same as that of a conventional concrete shield of γ-ray shield, and to confirm leakage of radiation.

## Description

### FIELD

Embodiments of the present invention relate to a radiation-scintillated shield and a manufacturing method of a radiation shielding resin.

### BACKGROUND

A material used for a radiation shield is made of a substance which scatters or absorbs, when a radiation is applied to the material of the radiation shield, the radiation to attenuate an amount of transmission of the radiation.

Here, the radiation indicates a generic term of α-ray, β-ray, γ-ray, X-ray, neutron ray, and the like. Among the above, the neutron ray reacts with a substance to directly or secondarily discharge the α-ray, the β-ray, the γ-ray, and the X-ray. Therefore, regarding the shielding of the neutron ray, it is required to consider not only the shielding of the neutron but also the shielding of the α-ray, the β-ray, the γ-ray, and the X-ray.

Interactions between these radiations and the substance also differ depending on the type of the radiation and the magnitude of energy. In particular, the γ-ray, the X-ray, and the neutron ray have high properties of transmitting the substance, and thus research and development regarding a substance shielding these rays are in progress.

Note that the X-ray and the γ-ray are called differently depending on the way of their occurrences, but in the description hereinafter, the X-ray and the γ-ray will be collectively described as the γ-ray. A reaction between the γ-ray and a substance depends on the magnitude of atomic number Z, and in a case of γ-rays with the same energy, as the atomic number Z and a density of a shielding substance becomes larger, a reaction rate is increased, and a shielding performance becomes high. Therefore, as the γ-ray shielding material, tungsten (W), bismuth (Bi), and lead (Pb) are more used than light elements such as carbon (C) and aluminum (Al).

On the other hand, the neutron ray does not relate to the atomic number Z in particular, and a reaction rate is different among specific element isotopes. For example, as examples with poor reaction rate with the neutron-ray, there can be cited hydrogen, lithium (Li), boron (B), and the like, in which in a case of lithium, a ⁶Li isotope (natural abundance of 7.6%) reacts with the neutron, and in a case of boron, a ¹⁰B isotope (natural abundance of 20%) reacts with the neutron, but a ⁷Li isotope (natural abundance of 92.4%) and a ¹¹B isotope (natural abundance of 80%) do not react with the neutron almost at all.

As a neutron shielding material, compounds of lithium and boron are mainly used. The γ-ray depends on the magnitude of the atomic number Z, but it does not particularly depend on the abundance ratio of isotope. Therefore, in order to increase the reaction rate with the neutron, there is a case where the isotope to be reacted is used by concentrating its proportion. For example, an isotope ¹⁰B is concentrated to 90% or more from natural boron to be used.

Regarding both the γ-ray and the neutron, generally, the higher the energy of radiation, the smaller the reaction rate and the smaller the shielding performance, except for a case where peculiar neutron resonance absorption to isotopes is performed. For this reason, in order to shield the radiation with high energy, it is required to increase a thickness of a shield through which the radiation passes.

A shield which is in practical use is cement/concrete (mortar is also included in concrete), and other than the above, a shield is sometimes formed by adding material for reaction with the radiation to resin or rubber. Although the concrete is advantageous for the shielding material because it is excellent in structural strength, shielding performance, workability, and adaptability, it has a weak point that a shielding thickness becomes larger than that of a denser material. In order to compensate for this weak point, studies regarding various kinds of heavy concrete and special cement are in progress.

The concrete is formed of cement, water, a coarse aggregate, a fine aggregate, and an admixture. The coarse aggregate has the highest volume proportion, the fine aggregate has the second highest volume proportion, and the cement, the water, and the admixture exist in gaps of these aggregates. Generally-used coarse aggregate and fine aggregate are gravel and sand. Chemical components of those aggregates are different depending on a collecting place, and are minerals in rocks and stones such as oxides, silicates, and carbonates of aluminum, calcium, and the like. The sand includes river sand and sea sand, and although a salt content is different, it is basically formed of particles of rocks and stones reduced in size through weathering.

The heavy concrete is used for shielding radiation. As described above, the larger the atomic number Z and the higher the density, the higher the effect of shielding the γ-ray, so that as the coarse aggregate and the fine aggregate, there are used limonite ore (2Fe₂O₃·3H₂O) having a high iron composition and having a density of 3 to 4 g/cm³, magnetic iron ore (Fe₃O₄) having a density of 4.6 to 5.1 g/cm³, barite (BaSO₄) having a density of 4.2 to 4.4 g/cm³, and galena (PbS) having a higher density of 7.5 g/cm³, and iron lump, iron pieces, steel ball, and the like having a density of 7.6 to 7.8 g/cm³, are also used.

However, the effect of shielding the γ-ray exhibited by these aggregates is higher than that of a general lightweight aggregate, but the effect of shielding a thermal neutron is low. As the aggregate for absorbing thermal neutron, there can be cited colmanite (also known as colemanite) (B₂O₃) having a density of 2.42 g/cm³, danburite (B₂O₃) having a density of 2.9 g/cm³, borosilicate glass or hard glass (B₂O₃) having a density of 2.25 g/cm³, and boron carbide (B₄C) having a density of 2.5 g/cm³. On the contrary, they are lightweight aggregates, and when they are solely used, the shielding efficiency of the γ-ray becomes poor, so that they are mixed with heavyweight aggregates. Consequently, the proportion of isotopes, which react with the neutron, existing in the entire volume is further reduced, and thus the shield thickness has to be increased.

The radiation shield is required to be able to not only shield the α-ray, the β-ray, the γ-ray, and the X-ray, but also shield the neutron ray.

In particular, the neutron sometimes causes a change to another nuclide. For example, regarding boron which is often used as the neutron absorbing material, when ¹⁰B being an isotope thereof reacts with the neutron, it discharges the α-ray to become ⁷Li being an isotope of lithium, and a prompt γ-ray of 478 keV is discharged from ⁷Li. Further, in a case of the neutron, levels of dealing with energies are different, ranging from the shielding of mainly thermal neutron (in the vicinity of 0.025 eV) from a nuclear reactor which is set as a neutron source, to the shielding targeting a region of high-energy neutron from an accelerator neutron source, an RI neutron source, and the sun in a space environment.

When the energy becomes high, the way of reaction becomes different, so that the shielding becomes difficult even with lithium and boron, and thus it is required to devise such that a moderator of the neutron is mixed to lower the energy, and then the shielding is performed. For shielding the γ-ray, a radiation shield concrete mainly using a heavyweight aggregate may be used, but in order to shield the neutron as well, an optimum combination with a conventional lightweight aggregate containing lithium or boron, is required.

Further, if the radiation shield is used in a broken state due to an earthquake, impact, or the like, leakage of radiation occurs, so that there is a need to check a deterioration in the radiation shielding function due to the breakage.

### BRIEF DESCRIPTION OF THE DRAWINGS

FIG. 1 is a sectional view illustrating a configuration of a radiation-scintillated shield according to a first embodiment.
FIG. 2 is a characteristic table illustrating physical characteristics of an aggregate in the radiation-scintillated shield according to the first embodiment.
FIG. 3 is a graph illustrating a light emission characteristic when GOS is used as a base material and praseodymium is used as an activator in the radiation-scintillated shield according to the first embodiment.
FIG. 4 is a graph illustrating a light emission characteristic when GOS is used as a base material and terbium is used as an activator in the radiation-scintillated shield according to the first embodiment.
FIG. 5 is a graph illustrating a calculated value regarding a transmission attenuation ratio of in each substance in a radiation shield with regard to γ-ray energy.
FIG. 6 is a sectional view illustrating a case where a defect portion is generated in the radiation-scintillated shield according to the first embodiment.
FIG. 7 is a sectional view illustrating a state in which light detectors are arranged in the radiation-scintillated shield according to the first embodiment.
FIG. 8 is a sectional view illustrating a configuration of a radiation-scintillated shield according to a second embodiment.
FIG. 9 is a flow chart illustrating a manufacturing method of a radiation shielding resin of the radiation-scintillated shield according to the second embodiment.

### DTAILED DESCRIPTION

An object of an embodiment of the present invention is to enable to perform shielding of a γ-ray and a neutron with a thickness which is about the same as that of a conventional concrete shield of γ-ray shield, and to enable to confirm leakage of radiation.

According to an aspect of the present invention, there is provided a radiation-scintillated shield which attenuates incident radiation, comprising a shielding part containing an activator-added gadolinium compound as an aggregate, wherein the activator uses the gadolinium compound as a base material and emits light when struck by the radiation.

Hereinafter, a radiation-scintillated shield and a manufacturing method of a radiation shielding resin according to embodiments of the present invention will be described while referring to the drawings. Here, mutually the same parts or similar parts are denoted by common reference numerals, and overlapped explanation thereof will be omitted.

### [First embodiment]

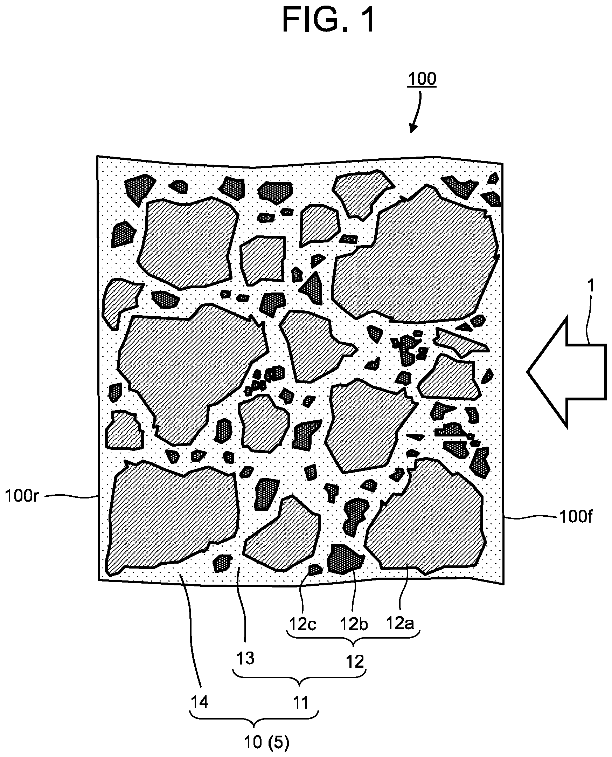

FIG. 1 is a sectional view illustrating a configuration of a radiation-scintillated shield 100 according to a first embodiment. Note that FIG. 1 illustrates, as an example, a case where a shape of the radiation-scintillated shield 100 is a flat plate shape having a shield surface on radiation source side 100f facing a radiation 1, and a shield surface on opposite side of radiation source 100r, but it is not limited to this. It is also possible that the radiation-scintillated shield 100 has a shape of curved surface, or shape having a change in thickness thereof. Specifically, the radiation-scintillated shield 100 may have a shape in accordance with an object of shielding in a nuclear reactor, an accelerator facility, an RI neutron source facility, a nuclear fuel facility, a nuclear fuel storage facility, a nuclear shelter, or a facility that requires shielding of radiation such as a heavy particle beam facility or a BNCT (neutron capture therapy) facility in a medical field. Note that as described above, the X-ray and the γ-ray will be collectively described as the γ-ray hereinafter.,

The radiation-scintillated shield 100 according to the present embodiment includes a concrete shielding part 10 as a shielding part 5. The concrete shielding part 10 includes an aggregate 11 and a cement portion 14.

The aggregate 11 is formed of a coarse aggregate 12 and a fine aggregate 13. Here, the coarse aggregate 12 is an aggregate in which particles each having a particle shape of 5 mm or more are included by 85% or more of the entire thereof, and the fine aggregate indicates one in which a particle diameter of each of all particles is 10 mm or less, and the particle diameter of 85% or more of all the particles is 5 mm or less.

Specifically, as the fine aggregate 13, one of a powder state is used. Further, the coarse aggregate 12 includes an aggregate with a large particle shape, an aggregate with a medium particle shape, and an aggregate with a relatively small particle shape, such as a large-size aggregate 12a, a medium-size aggregate 12b, and a small-size aggregate 12c.

A material of the aggregate 11 is a gadolinium compound. As the gadolinium compound, it is possible to use, for example, gadolinium oxide (Gd₂O₃: abbreviated as GO, hereinafter), gadolinium gallium garnet (Gd₃Ga₅O₁₂: abbreviated as GGG, hereinafter), gadolinium oxysulphide (Gd₂O₂S: abbreviated as GOS, hereinafter), gadolinium silicate (Gd₂SiO₅: abbreviated as GSO, hereinafter), and the like. Here, a density of GO is 7.4 g/cm³, a density of GGG is 7.09 g/cm³, a density of GOS is 7.3 g/cm³, and a density of GSO is 6.7 g/cm³.

Gadolinium (Gd) being a rare-earth element is rare metal. Isotopes thereof that exist in the nature are six types of ¹⁵⁴Gd (2.18%), ¹⁵⁵Gd (14.80%), ¹⁵⁶Gd (20.47%), ¹⁵⁷Gd (15.65%), ¹⁵⁸Gd (24.84%), and ¹⁶⁰Gd (21.86%). Note that the numeric value within parentheses indicates a natural abundance. The ¹⁶⁰Gd becomes ¹⁶⁰Dy being a stable nuclide through β disintegration (half-life of 3.1 × 10¹⁹ years). The Gd isotopes other than that are stable nuclides.

A main reaction of Gd is (n, y) reaction of absorbing the neutron and discharging the γ-ray. By each of (n, γ) reactions of ¹⁵⁴Gd, ¹⁵⁵Gd, ¹⁵⁶Gd, and ¹⁵⁷Gd, a stable nuclide of ¹⁵⁵Gd, ¹⁵⁶Gd, ¹⁵⁷Gd, and ¹⁵⁸Gd is generated respectively. In the case of ¹⁵⁸Gd, ¹⁵⁹Gd generated from ¹⁵⁸Gd by the (n, y) reaction is turned into terbium 159 (¹⁵⁹Tb) being a stable isotope, in accordance with β disintegration. By this disintegration, β-rays of 970.6 keV (62%), 912.6 keV (26%), 607.09 keV (12%), and 622.42 keV (0.31%) are discharged. Further, γ-rays of 363.55 keV (11.4%), 58 keV (2.15%), 348.16 keV (0.234%), and 226.16 keV (0.215%) are discharged.

In particular, each of 157Gd and 155 Gd having a large reaction cross section in a thermal neutron region discharges a neutron capture γ-ray of 8 MeV through the (n, y) reaction. A discharge mode of this γ-ray can be roughly classified into two, which are a continuous spectrum and a discrete spectrum. Almost all (93.8%) of the discharge mode of γ-ray is the continuous spectrum, which is a spectrum in which, from an unstable compound nucleus to a stable ground level, single energy of 8 MeV is not discharged but a discharge ratio ranging from high energy to low energy becomes large. On the other hand, in the discrete spectrum, γ-rays with high energy such as 5.62 MeV + 2.25 MeV (1.3%), 5.88 MeV + 1.99 MeV (1.6%), 6.74 MeV + 1.11 MeV (0.02%), and 7.87 MeV (0.02%) are discharged, but a proportion thereof is small to be 6.2%.

Note that a resonance region of the neutron capture reaction described above is in a range of about 10 eV to about 3 keV in the case of ¹⁵⁴Gd, it is in a range of about 2 eV to about 200 eV in the case of ¹⁵⁵Gd, it is in a range of about 30 eV to about 2 keV in the case of ¹⁵⁶Gd, and it is in a range of about 3 eV to about 300 eV in the case of ¹⁵⁷Gd. Therefore, an energy region including a thermal neutron region which is so-called 1/V region, and a region up to several KeV including a resonance region higher than the above energy region, for example, a region up to 3 keV, will be collectively referred to as a low-energy region in this embodiment.

The shielding performance with respect to the γ-ray (including the X-ray) depends on not only the density but also the atomic number Z. The number n of exponentiation is different depending on a reaction situation (photoelectric effect, Compton scattering, electron pair creation). The atomic number of gadolinium is 64 and the atomic number of iron is 26, and thus Z of gadolinium is about 2.5 times that of iron, so that it becomes important to use gadolinium. Further, regarding a specific weight as well, a specific weight of a conventional example produced as a radiation shield is about 3.5. On the other hand, a specific weight of a concrete shielding part 10 in which all of the aggregates are made of GOS is 4.9 or more, which is larger than that of a shield produced by using an iron and steel material as an aggregate.

Besides, an activator using a gadolinium compound selected from these as a base material, is added. As the activator, a rare-earth element is used. Among rare-earth elements, for example, praseodymium (Pr), terbium (Tb), europium (Eu), cerium (Ce), and the like are particularly preferable.

Each of the fine aggregate 13 and the coarse aggregate 12 is powder made by adding the activator to the aforementioned gadolinium compound, or a sintered compact made by firing the powder. Note that, the firing is performed through HIP (Hot Isostatic Pressing) or hot pressing.

A proportion of the activator to be added to the gadolinium compound is 0.001 mol% (10 ppm) to 50 mol%. If the proportion of the activator is less than 0.001 mol%, the light emission effect has no significance. If the proportion of the activator exceeds 50 mol%, the light emission effect has no significance due to concentration quenching, and further, since the proportion of gadolinium becomes small, the shielding effect has no significance. Further, the proportion of the activator to be added to the gadolinium compound is preferably 0.1 mol% to 10 mol%.

Before the firing into the ceramic or sintered compact, the particle size distribution is broadened, or after the firing into the ceramic or sintered compact, grinding is performed to broaden the particle size, to thereby obtain the fine aggregate 13 and the coarse aggregate 12.

Generally, a coarse aggregate and a fine aggregate used for concrete are gravel and sand. The concrete is formed of cement, water, a coarse aggregate, a fine aggregate, and an admixture. The coarse aggregate has the highest volume proportion, the fine aggregate has the second highest volume proportion, and the cement, the water, and the admixture exist in gaps of these aggregates.

In the concrete shielding part 10 of the present application, the materials of the coarse aggregate and the fine aggregate of the general concrete are replaced with the coarse aggregate 12 and the fine aggregate 13 molded from the gadolinium compound and the activator. Therefore, the proportion of the cement 14, the water, the coarse aggregate 12, the fine aggregate 13, and the admixture, processes such as kneading and solidification, and the like, are similar to those of normal concrete.

Note that in the shielding part 5, it is also possible to configure such that the density of the aggregate 11 is monotonously increased toward a direction in which the radiation 1 transmits, namely, the density of the aggregate 11 is made to have a gradient in the direction in which the radiation 1 transmits, and a low-density portion is arranged on the incident side.

Next, physical characteristics of the aggregate in the radiation-scintillated shield according to the first embodiment will be described.

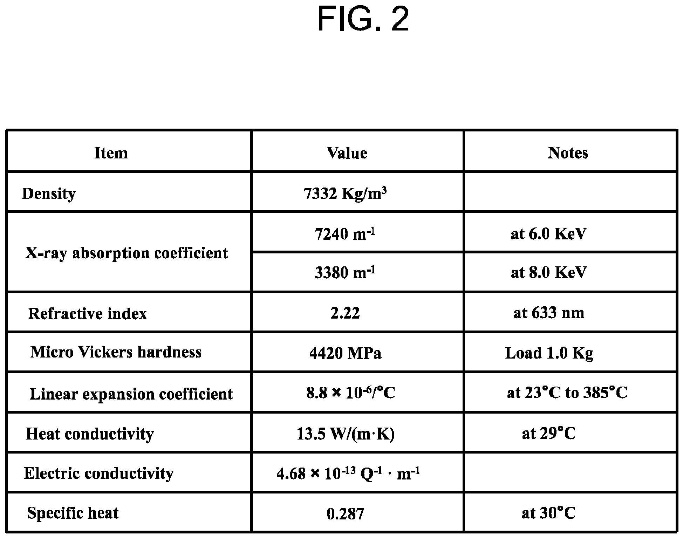

FIG. 2 is a characteristic table illustrating the physical characteristics of the aggregate in the radiation-scintillated shield according to the first embodiment. FIG. 2 illustrates an example in which GOS is used as the gadolinium compound, and Pr is used for the activator, and characteristics thereof are as follows.
Density: 7332 kg/m³
X-ray absorption coefficient: 7240 m⁻¹ (at 6.0 KeV)
   3380 m⁻¹ (at 8.0 KeV)
Refractive index: 2.22 (at 633 nm)
Micro Vickers hardness: 4420 MPa (load 1.0 kg)
Linear expansion coefficient: 8.8 × 10⁻⁶/°C (at 23°C to 385°C)
Heat conductivity: 13.5 W/(m·K) (at 29°C)
Electric conductivity: 4.68 × 10⁻¹³ Q⁻¹ · m⁻¹
Specific heat: 0.287 (at 30°C)

The density which is important for shielding the γ-ray is 7332 kg/m³, which is far larger than that of materials such as B and Li which are conventionally used for the neutron absorbing material, and is close to the density of iron and steel, and the like.

The linear expansion coefficient is 8.8 × 10⁻⁶/°C, which is sufficiently smaller than 1.0 × 10⁻⁵/°C, which is a linear expansion coefficient of iron and concrete.

The other physical characteristics also have no special points in particular.

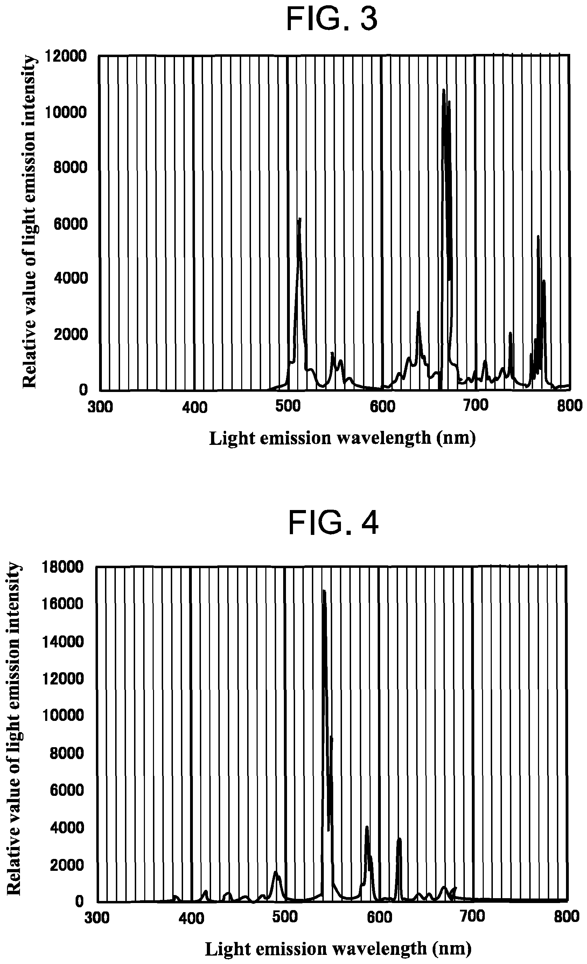

FIG. 3 is a graph illustrating a light emission characteristic of the radiation-scintillated shield according to the first embodiment when GOS is used as the base material and praseodymium is used as the activator. A horizontal axis indicates a light emission wavelength (nm), and a vertical axis indicates a relative value of light emission intensity.

In the case of FIG. 3 in which GOS is used as the base material and Pr is used for the activator, there are generated peaks of light emission intensity in the vicinity of 670 nm, in the vicinity of 510 nm, in the vicinity of 770 nm, in the vicinity of 640 nm, and so on.

FIG. 4 is a graph illustrating a light emission characteristic of the radiation-scintillated shield according to the first embodiment when GOS is used as the base material and terbium is used for the activator. In a similar manner to FIG. 3, a horizontal axis indicates a light emission wavelength (nm), and a vertical axis indicates a relative value of light emission intensity.

In the case of FIG. 4 in which GOS is used as the base material and Tb is used for the activator, there are generated peaks of light emission intensity in the vicinity of 540 nm, in the vicinity of 590 nm, in the vicinity of 620 nm, and so on.

The cases of using GOS as the base material and Pr and Tb for the activators are exemplified by using FIG. 3 and FIG. 4, and light emission phenomena of those are light emission phenomena of Pr and Tb, or not-illustrated europium (Eu), as the activators, with GOS used as the base material, and the respective elements have their own light emission wavelengths.

The light emission phenomenon in this case is caused in a process in which when the entire GOS containing Gd atoms configuring GOS is irradiated with the radiation 1, carriers (electron-holes) are generated, the activator is excited, and transition to a low-energy level is caused.

Peaks capable of being detected are different depending on a sensitivity region of a light detector (including a camera), but any of the peaks can be detected by a normal light detecting unit. Regarding the detection of light, in order to secure an S/N ratio, it is preferable to use a band filter which allows only a region including a peak wavelength to be a detection target to pass therethrough. Here, the band filter may be an optical filter, or it is also possible to use an electrical band filter after photoelectric conversion.

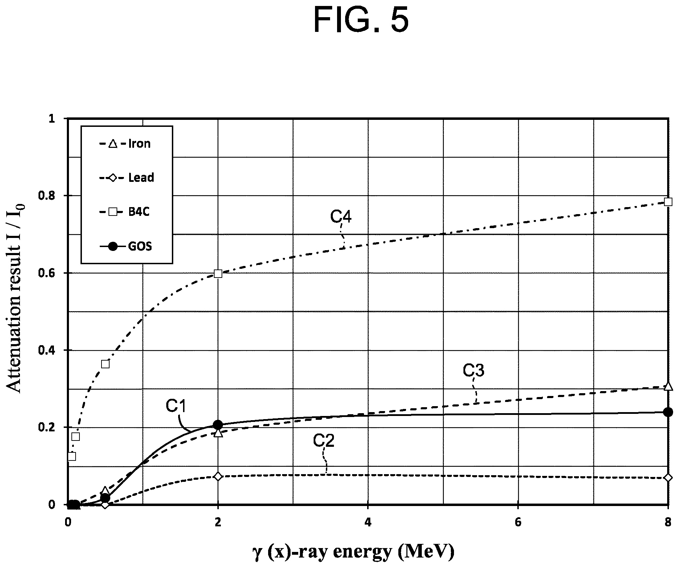

FIG. 5 is a graph illustrating a calculated value regarding a transmission attenuation ratio of in each substance in a radiation shield with regard to γ-ray energy. A horizontal axis indicates the γ-ray energy (MeV), and a vertical axis indicates an attenuation result I / I₀ with respect to a radiation flux when it is incident. In this case, the radiation shield has a thickness of 5 cm regarding each substance.

A curve C1 indicated by a solid line indicates a case of GOS. A curve C2 indicated by a dotted line indicates a case of Lead. A curve C3 indicated by a broken line indicates a case of Iron. Further, a curve C4 indicated by an alternate long and short dashed line indicates a case of B₄C.

Among these substances, lead having the largest atomic number Z of 82, causes the largest attenuation of the γ-ray. On the other hand, the atomic number Z of Gd is large to be 64, which provides a high shielding effect of the γ-ray, and GOS being a compound of Gd, O, and S, exhibits the attenuation effect which is about the same as that of iron. The B₄C having the effect of shielding the neutron, has the smallest attenuation effect of the γ-ray.

Among the elements, Gd has the largest reaction cross section with respect to the thermal neutron. Among the above-described natural isotopes of Gd, ¹⁵⁷Gd and ¹⁵⁵Gd, in particular, have the reaction cross sections of 66 times and 15.8 times, respectively, larger than the reaction cross section of ¹⁰B, at the thermal neutron energy of 0.0253 eV of neutron energy. Further, as described above, at the energy from 100 eV to the vicinity of 1 KeV, not only ¹⁵⁷Gd and ¹⁵⁵Gd but also the other Gd isotopes have a plurality of resonance absorption peaks, and have a cross section larger than that of ¹⁰B.

As described above, the main reaction of Gd with the neutron is different from the reaction of boron, and is the (n, y) reaction of reacting with the neutron and discharging the γ-ray. The reaction of boron is (n, α) reaction, in which ^{7∗}Li is generated, and in a process of turning into ⁷Li, a prompt γ-ray of 478 KeV is discharged. On the other hand, in the case of Gd, ¹⁵⁵Gd, ¹⁵⁶Gd, ¹⁵⁷Gd, and ¹⁵⁸Gd which are respectively generated by the (n, y) reactions of ¹⁵⁴Gd, ¹⁵⁵Gd, ¹⁵⁶Gd, and ¹⁵⁷Gd, respectively, are stable isotopes, and secondary products which discharge β-rays or γ-rays in accordance with disintegration are not generated.

As described above, GOS has not only the above-described shielding effect with respect to the neutron but also an attenuation effect with respect to the γ-ray which is about the same as that of iron.

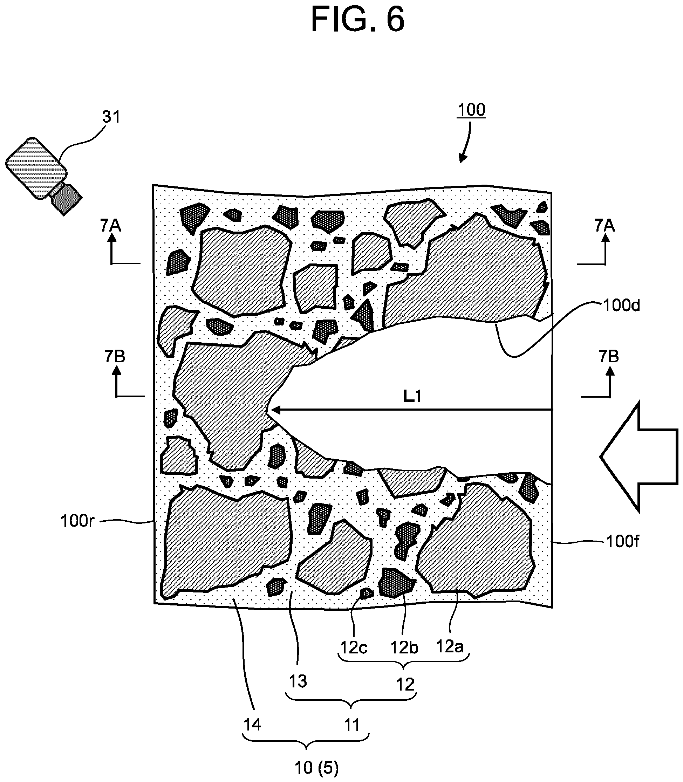

FIG. 6 is a sectional view illustrating a case where a defect portion is generated in the radiation-scintillated shield 100 according to the first embodiment. FIG. 6 illustrates a state in which a defect portion 100d with a depth of LI is generated from a side of the shield surface on radiation source side 100f toward the shield surface on opposite side of radiation source 100r. Note that the shield surface on opposite side of radiation source 100r can be observed by a camera 31.

When the defect portion 100d is generated in the radiation-scintillated shield 100 as above, a light emission intensity of the shield surface on opposite side of radiation source 100r becomes large partially, and thus it is possible to confirm the defect. Further, this confirmation can be performed even remotely as long as light can be visually recognized.

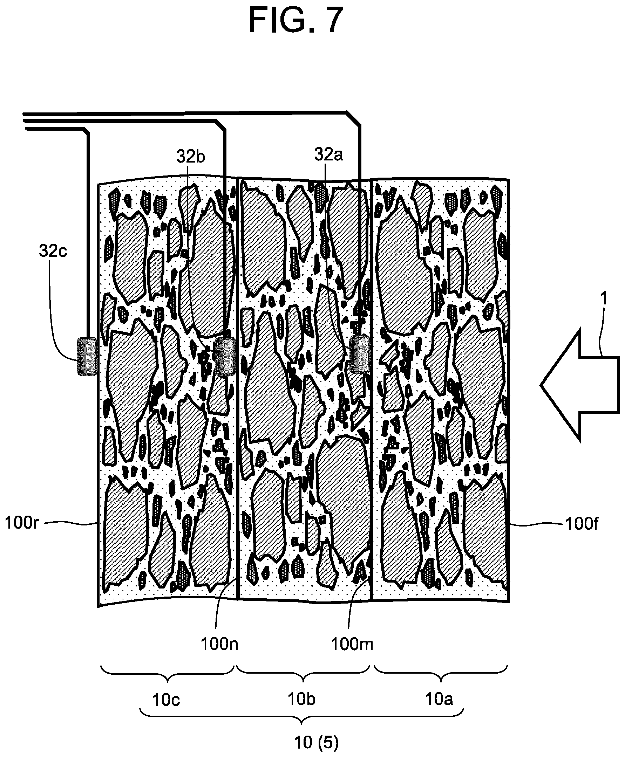

FIG. 7 is a sectional view illustrating a state in which light detectors are arranged in the radiation-scintillated shield 100 according to the first embodiment.

FIG. 7 illustrates a case in which three layers of concrete shielding parts 10a, 10b, and 10c of the radiation-scintillated shield 100 are stacked in the direction in which the radiation 1 transmits.

In order to detect light from shield surfaces on opposite side of radiation source 100m, 100n, and 100r of the concrete shielding parts 10a, 10b, and 10c, respectively, a first light detector 32a, a second light detector 32b, and a third light detector 32c are respectively provided.

In a manner as above, by measuring the light emission intensities at the shield surfaces on opposite side of radiation source 100m, 100n, and 100r along the direction in which the radiation 1 transmits, it is possible to check the attenuation effect of the radiation 1.

As described above, according to the radiation-scintillated shield 100 according to the present embodiment, it is possible to obtain the following features and effects.

Firstly, there can be cited a point that the radiation-scintillated shield 100 emits light when struck by the gamma (X)-ray and the neutron in particular in the thermal neutron region. The radiation 1 can be detected by the light detector. Therefore, it becomes possible to visually recognize the leaked radiation remotely, for example, in a case where the radiation 1 leaks to the outside of a radiation shield which is intended for biological shielding. Consequently, it is possible to recognize a place where the leakage of radiation 1 occurs, and even the intensity of the radiation 1. On the other hand, when a radiation detector is used, it is not possible to specify the place where the leakage of radiation 1 occurs as described above, unless each radiation intensity of each point of a surface of a radiation shield is measured.

Secondly, there can be cited a point that the aggregate 11 of the radiation-scintillated shield 100 has weight which is about the same as that of the conventional concrete shield for γ-ray shielding, and it has both the function of shielding the neutron and the function of shielding the gamma (X)-ray. Specifically, with a concrete thickness which is nearly equal to or smaller than that of the conventional concrete (including mortar as well) of γ-ray shield, it is possible efficiently shield both the neutron and the gamma (X)-ray.

Thirdly, there can be cited a point that in the radiation-scintillated shield 100, an alkali-aggregate reaction being one of deterioration phenomena of general concrete, is unlikely to occur. As the alkali-aggregate reaction, an alkali-silica reaction (ASR) and an alkali-carbonate reaction are known. These are reaction phenomena in which metal ions of sodium, potassium, and the like contained in cement are subjected to a chemical reaction with silica in the mineral of the aggregate, resulting in that abnormal expansion occurs, which causes cracks in the concrete. On the other hand, the aggregate 11 of the radiation-scintillated shield 100 according to the present embodiment has a characteristic that it is a harmless aggregate containing no substance which causes this alkali-silica reaction.

Fourthly, there can be cited a point that the aggregate 11 of the radiation-scintillated shield 100 is produced through the HIP treatment, and thus the aggregate 11 itself endures high-temperature and high-pressure states, and besides, a thermal expansion coefficient of the aggregate 11 is very small. Specifically, the linear expansion coefficient of GOS is 8.8 × 10⁻⁶/°C, which is sufficiently smaller than the linear expansion coefficient of iron and concrete of 1.0 × 10⁻⁵/°C. For this reason, there is a characteristic that fracture or crack due to the thermal expansion of the aggregate itself is unlikely to occur.

### [Second embodiment]

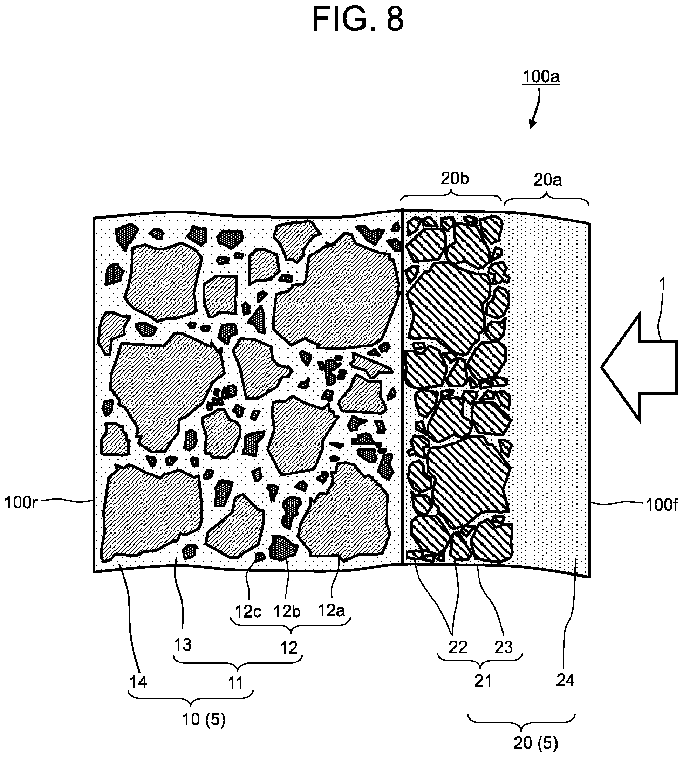

FIG. 8 is a sectional view illustrating a configuration of a radiation-scintillated shield according to a second embodiment.

The present embodiment is a modification of the first embodiment. Specifically, a radiation-scintillated shield 100a according to the present embodiment includes a concrete shielding part 10 similar to that of the first embodiment, as a shielding part 5, and it further includes a radiation shielding resin 20.

As illustrated in FIG. 8, the radiation shielding resin 20 is arranged further on the incident side of the radiation 1 than the concrete shielding part 10.

The radiation shielding resin 20 includes an aggregate 21 and a resin portion 24.

The aggregate 21 includes a coarse aggregate 22 and a fine aggregate 23. For a material of the aggregate 21, it is possible to use ceramic or sintered compact molded from a mixture of granules of a gadolinium compound and granules of an activator, in a similar manner to the aggregate 11.

The aggregate 21 exists unevenly on a downstream side of an incident direction of the radiation 1, in the radiation shielding resin 20, and it forms an aggregate keeping layer 20b together with resin. Further, a resin layer 20a is a layer composed only of resin, but the fine aggregate 23 may exist within a region of the resin layer 20a.

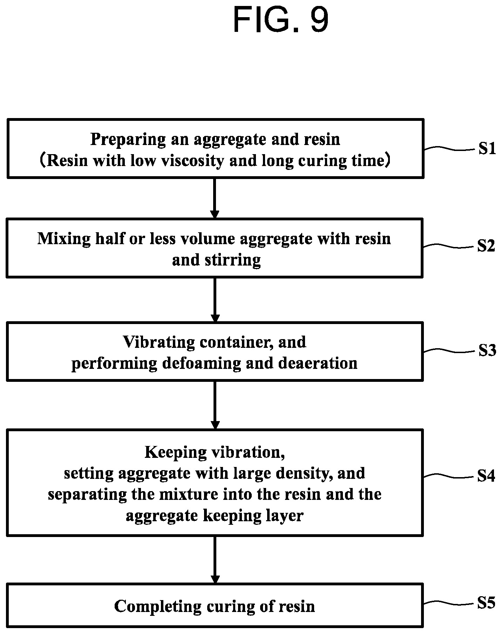

FIG. 9 is a flow chart illustrating a manufacturing method of the radiation shielding resin 20 of the radiation-scintillated shield 100a according to the second embodiment.

First, an aggregate and resin are prepared for each of the aggregate 21 and the resin portion 24 (step S1). Note that for the resin portion 24, resin with a large content of paraffin or hydrogen is used. Further, as the resin, for example, a two-liquid-mixing type transparent resin with low viscosity and long curing time is used. For example, an amount of an epoxy resin is set to a proportion of about 1.5 to 2 times or more a volume capacity of a GOS piece. In a case where the curing time becomes long when the temperature is low, due to a relation with temperature, the curing time is set to be long by performing temperature control in a transition step.

Next, the aggregate whose volume ratio is half or less relative to a volume amount of the resin, is mixed with the resin and stirred (step S2). For example, a main agent of the first liquid and the light-emitting GOS piece are accommodated in a container, and then sufficiently stirred. Next, a curing agent of the second liquid is added.

Next, the container is vibrated, to thereby perform defoaming and deaeration of air and the like in the resin (step S3). The vibration of the container is performed by mounting the container on a vibration table, for example. Further, the deaeration can be performed by using, for example, a vacuum chamber. An environmental temperature of the container is set to a low-temperature state so as to decrease a curing speed of the epoxy resin.

Next, while keeping the vibration, sedimentation of the aggregate with a large density is caused, to thereby separate the mixture into the resin layer 20a and the aggregate keeping layer 20b (step S4). While a specific weight of the epoxy resin is about 1.1 to 1.4 g/cm³, the density of the GOS piece is 7.3 g/cm³ or more, so that when the curing is caused while vibrating the entire container, there is created a situation where the sedimentation of GOS piece is caused due to the difference in specific weight and the GOS piece is deposited densely on the lower side, and an upper part is formed substantially only of the transparent resin layer. Specifically, the resin layer 20a and the aggregate keeping layer 20b are vertically separated from each other with the resin layer 20a positioned above the aggregate keeping layer 20b. The resin layer 20a includes only the resin portion 24, or a part of the fine aggregate 23. The aggregate keeping layer 20b includes the aggregate 21 and the resin portion 24.

Next, the curing of resin is completed (step S5).

Note that it is also possible that in step S4, the sedimentation is not completely finished, and the resin is cured in the middle stage of the sedimentation. In this case, it is possible that, in the shielding part 5, the density of the aggregate 11 is monotonously increased in the direction in which the radiation 1 transmits, namely, the density of the aggregate 11 is made to have a gradient in the direction in which the radiation 1 transmits, to thereby arrange the low-density portion on the incident side.

As described above, according to the present embodiment, slowing-down fast neutron to a low-energy region including a thermal neutron region or a resonance region in an early stage makes it possible to accelerate the reaction between the low-energy neutron, and the aggregate 11 and the aggregate 21.

### [Other embodiments]

While the embodiments of the present invention have been described above, the embodiments have been presented by way of example only, and are not intended to limit the scope of the inventions.

Further, the characteristics of the respective embodiments may also be combined. Further, the embodiments can be embodied in a variety of other forms, and various omissions, substitutions and changes may be made without departing from the spirit of the inventions.

The accompanying claims and their equivalents are intended to cover such forms or modifications as would fall within the scope and spirit of the inventions.

### EXPLANATION OF REFERENCE NUMERALS

1 ··· radiation, 5 ··· shielding part, 10 ··· concrete shielding part, 10a ··· first block, 10b ··· second block, 10c ··· third block, 11 ··· aggregate, 12 ··· coarse aggregate, 12a ··· large-size aggregate, 12b ··· medium-size aggregate, 12c ··· small-size aggregate, 13 ··· fine aggregate, 14 ··· cement portion, 20 ··· radiation shielding resin, 20a ··· resin layer, 20b ··· aggregate keeping layer, 21 ··· aggregate, 22 ··· coarse aggregate, 23 ··· fine aggregate, 24 ··· resin portion, 31 ··· camera, 32 ··· light detector, 32a ··· first light detector, 32b ··· second light detector, 32c ··· third light detector, 100, 100a ··· radiation-scintillated shield, 100d ··· defect portion, 100f ··· shield surface on radiation source side, 100m, 100n, 100r ··· shield surface on opposite side of radiation source

## Claims

1. A radiation-scintillated shield (100, 100a) which attenuates incident radiation (1), comprising
a shielding part (5) containing an activator-added gadolinium compound as an aggregate (11), wherein
the activator uses the gadolinium compound as a base material and emits light when struck by the radiation (1).

2. The radiation-scintillated shield (100a) according to claim 1, wherein
the shielding part is formed together with a transparent resin.

3. The radiation-scintillated shield (100, 100a) according to claim 1, wherein
the shielding part is used for attenatin a γ-ray and a low-energy neutron.

4. The radiation-scintillated shield (100, 100a) according to any one of claims 1 to 3, wherein
the gadolinium compound contains at least any one of gadolinium oxide, gadolinium gallium garnet, gadolinium oxysulfide, and gadolinium silicate.

5. The radiation-scintillated shield (100, 100a) according to any one of claims 1 to 4, wherein
the activator contains a rare-earth element.

6. The radiation-scintillated shield (100, 100a) according to claim 5, wherein
the rare-earth element includes at least any one of terbium, praseodymium, europium, and cerium.

7. The radiation-scintillated shield (100, 100a) according to any one of claims 1 to 6, wherein
the gadolinium compound and the activator are provided as a sintered compact thereof.

8. The radiation-scintillated shield (100a) according to claim 2, wherein
a part of the transparent resin (24) is arranged on an incident side of the radiation (1), or a density of the shielding part (5) is made to have a gradient and a low-density portion is arranged on the incident side.

9. A manufacturing method of a radiation shielding resin (20) formed of an activator-added gadolinium compound together with a transparent resin, the manufacturing method comprising:
mixing an aggregate containing the gadolinium compound and the activator with resin in a container; and
causing sedimentation of the aggregate with a large density to separate the mixture into an aggregate keeping layer and a resin layer.
